# EUROPÄISCHE PATENTSCHRIFT

(11) **EP 1 056 361 B1**
(45) Veröffentlichungstag und Bekanntmachung des Hinweises auf die Patenterteilung: **23.08.2006**
(21) Anmeldenummer: 99908915.4
(22) Anmeldetag: 17.02.1999
(51) Int. Cl.: A23P 1/10, A23L 1/317

(54) **VERFAHREN ZUR HERSTELLUNG UND FORMGEBUNG VON LEBENSMITTELN, WIE ZUM BEISPIEL FLEISCH- UND WURSTWAREN**
METHOD FOR PRODUCING AND SHAPING FOOD, SUCH AS MEAT PRODUCTS AND SAUSAGES
PROCEDE POUR PRODUIRE ET FACONNER DES ALIMENTS, COMME PAR EXEMPLE DES PRODUITS CARNES ET DES SAUCISSES

(30) Priorität: 19.02.1998 DE 19807794
(43) Veröffentlichungstag der Anmeldung: 06.12.2000
(73) Patentinhaber: Kortschack, Fritz, 14089 Berlin (DE)
(72) Erfinder: Kortschack, Fritz, 14089 Berlin (DE)
(74) Vertreter: Meissner, Bolte & Partner
(86) Internationale Anmeldenummer: PCT/EP1999/001022
(87) Internationale Veröffentlichungsnummer: WO 1999/042004

(56) Entgegenhaltungen:
- DE-C- 4 231 093

## Beschreibung

Verfahren zur Herstellung und Formgebung von Lebensmitteln wie zum Beispiel Fleisch- und Wurstwaren, wobei ein Halbfertigprodukt in einem Beutel oder zwischen Folien gebracht wir das Halbfertigprodukt vakuumbehandelt und verschlossen wird, die gefüllte Packung zwischen zwei Platten justiert und unter Aufbringung eines leichten Druckes auf die Packung eine Gleichverteilung des Packungsinhaltes erreicht wird.

Die Erfindung betrifft ein Verfahren zur Produktion und Formgebung von Lebensmitteln nach dem Oberbegriff des Hauptanspruchs.

Es ist bekannt, daß z. B. Wurst- und Fleischwaren, die über einen längeren Zeitraum hin haltbar sein sollen, einer besonderen Behandlung unterworfen werden müssen. Vorwiegend Brühwürste (Bratwürste, Brätklößchen, o.ä.), die ungeräuchert und ohne Verwendung von Nitritpökelsalz in den Verkehr gelangen, sind unverpackt nur kurze Zeit haltbar.

Der gegenwärtige Stand der Technik zur Produktion von verpackten Lebensmitteln wird in den DE 42 23 482 C1, DE 39 11 463 C2 und DE 43 26 688 C1 beschrieben.

In der **DE 42 23 482 C1** wird folgendes Verfahren zur Herstellung von gebrühten Wurstwaren, Fleischwaren und fleischähnlichen Produkten erläutert:
Das Füllgut wird in einen verschließbaren Beutel oder zwischen zwei zu verbindende Folien gefüllt.
Der Beutel oder die Folien werden durch Verschweißen, Permanentdruck, Abclippen, Abbinden oder Abknicken an den Öffnungen luftdicht verschlossen, nachdem die eingeschlossene Luft durch Vakuumierung aus dem Zwischenraum der Packung entfernt wurde.
Damit gleich große Fertigprodukte entstehen, wird das Füllgut gleichmäßig in der Packung verteilt.
Zwischen zwei auf die Packungsgröße abgestimmte Gatter wird die befüllte und verschlossene Packung gelegt und durch Annäherung der Gatter bis auf die Materialdicke der Folien eine Trennung des Füllgutes in einzelne Stränge erreicht.
Diese Art der Fertigung erfordert, daß die Beutel, bzw. der Raum zwischen den Folien, nicht vollständig ausgefüllt wird, da noch Stege abzupressen sind. Bei einer vollständigen Befüllung ließen sich die Gatterstege wegen der auftretenden Spannung der Folien nicht aufeinanderpressen und es könnte keine saubere Trennung erfolgen.
An den Enden der einzelnen Stränge bilden sich unvermeidbar Falten, in denen sich Fett oder Gelee während des Erhitzunssvorgangs absetzt. Bei dem vorgestellten Verfahren erfolgt eine gezielte Ausmuldung der Folien durch den sich aufbauenden Innendruck der Packung, unterstützt durch den Unterdruck zwischen Tiefziehplatten und Packungsoberfläche. Dadurch wird gewährleistet, daß exakt soviel Folie gedehnt wird, wie Brät von den entstehenden Ausmuldungen in den Folien aufgenommen werden kann. Es entsteht eine Packung, die das Halbfertigprodukt von allen Seiten gleichmäßig abdeckt und eine saubere Trennung in einzelne Stränge sichert.

Ein weiteres Verfahren zur Herstellung von gebrühter, nicht geräucherter Wurst, Brätklößchen und ähnlichen Rohbräten wird in der DE 39 11 463 C2 wie folgt vorgestellt:
Das Verfahren sieht vor, daß mit Hilfe einer Füllmaschine und einem entsprechenden Verteilerkopf (Rechenfüller) rohes Brät in vorgeformte (tiefgezogene) Folien gefüllt wird.
Bei diesem Verfahren ist es notwendig, daß die einzelnen Stränge einer Pakkung das gleiche Volumen aufweisen, da sonst das Sollgewicht der Packung nicht erreicht wird und außerdem in den evtl. nicht befüllten Hohlräumen sich Fett und Gelee absetzt. Während des Vakuumierens dehnt sich das Brät sehr leicht aus und "verunreinigt" die Siegelnähte.
Bei dem neuen Verfahren kann auf eine Unterteilung des Volumenstromes je Packung verzichtet werden, da sich eine gleichmäßige Verteilung durch die Annäherung Platten automatisch ergibt. Auf den Einsatz eines Spezialverteilerkopfes kann verzichtet werden. Der apparative Aufwand reduziert sich erheblich.

Ein Verfahren zur Reifung und Trocknung von Rohwürsten, Dauerwürsten und ähnlichen Produkten in einer zu vakuumierenden wasserundurchlässigen Form, oder Hülle wird in der DE 43 26 688 C1 beschrieben:
Das Rohmaterial wird wie üblich unter ergänzender Zugabe von feuchtigkeitaufhehmenden Stoffen und mit schnell säuernden Starterkulturen und/oder GdL gefertigt.
Das Rohmaterial (Wurstbrät, grobe Fleischstücken) wird in Formen oder Hüllen aus wasserundurchlässigem Material gefüllt.
Die Form oder Hülle samt Inhalt wird unmittelbar nach dem Befüllen einem Unterdruck zur Entlüftung des Rohmaterials ausgesetzt. Anschließend wird die Hülle oder Form fest verschlossen.
In diesem Verfahren wird die Herstelhing von Rohwürsten unter Zusatz von wasseraufnehmenden Stoffen geschildert, wobei jede Wurst in eine Hülle oder Form gefüllt wird. Eine Unterteilung vor oder nach dem Füllvorgang erfolgt nicht, da nur Einzelstücke produziert werden.
Das neue Verfahren ermöglicht, daß auch Rohwurstpackungen unter Verwendung des Verfahrens DE 43 26 688 C1 hergestellt werden können.
Mit Hilfe des neuen Verfahrens kann sowohl die Verformung der Unterfolie, der Oberfolie als auch beider Folien zur selben Zeit bewerkstelligt werden. Bei synchroner Ausformung der Ober- und Unterfolie können dünnere Materialien zum Einsatz gelangen, da die mechanische Belastung der Folien aufgrund ihrer geringeren Ausformtiefe erheblich reduziert wird.
Um zu verhindern, daß sich durch die Weitung in der Folie Risse bilden, ist es unabdingbar, daß weiches, im kalten Zustand dehnungsfähiges Folienmaterial eingesetzt wird.
Das neue Verfahren ermöglicht es, ähnlich wie im Verfahren DE 39 11 463 C2 vorgesehen, die aufeinanderliegenden Folien zwischen den geformten Halbfertigprodukten zu versiegeln. Da die zu verschweißenden Folienbereiche - anders als beim Einsatz des Verfahrens DE 39 11 463 C2 - mit Fett und Fleischeiweiß in
Berührung gekommen sind, ist eine Folie zu verwenden, die eine Versiegelung durch Fett- und Eiweißfilme hindurch zuläßt. Nach Beendigung der Fertigung ermöglicht diese Art der Verpackung eine Einzelentnahme der Produkte.
Wenn im Anschluß an die Verformung der Lebensmittel auf der Hoch- und/oder Tiefziehmaschine Gatter wie im Verfahren DE 42 23 482 C1 zum Einsatz kommen, liegen nach Abschluß der Fertigung Packungen vor, die mehrere einzelne Produkte mit einer Folie umhüllen.

Eine Vorrichtung und ein Verfahren zur Herstellung von Würsten, Brätklößchen oder ähnlichen Rohbräten wird in der DE 195 18 168 A1 beschrieben:
Zur Durchführung dieses Verfahrens ist es, wie bei allen bisher bekannten Tiefziehvorgängen unerläßlich, daß die Folien vor dem Tiefrug erwärmt und damit formbar werden. Der Verformungsvorgang der erhitzten Folien in vorgegebene Vertiefungen erfolgt von der Unterseite mittels Unterdruck und wird durch paßgenaue Stempel oder Druckluft, die auf die Oberseite der Folien wirken, unterstützt.
Jeder Rohling einer Packung wird separat portioniert und in direktem Kontakt mit einem Stempel in die offenen Tiefziehformen gedrückt. Zur Durchführung dieses Füllvorgangs ist es notwendig, daß die tiefgezogenen Formen von unten unterstützt werden.
Derartige Hilfsvorrichtungen sind zur Durchführung des neuen Verfahrens nicht erforderlich. Das neue Verfahren sieht vor, daß eine festgelegte Position des pastösen Halbfertigprodukts auf eine Unterfolie gespritzt, darüber eine Oberfolie gezogen, die Luft abgesaugt und die Oberfolie mit der Unterfolie an den Rändern verschweißt wird. Das Halbfertigprodukt kann auch portionsweise in einen Folienbeutel gefüllt werden, der danach entlüftet und verschlossen wird. Bis zu diesem Zeitpunkt sind die Oberflächen der Folien nicht verformt, jedoch die Packungsränder ringsum so verschweißt, daß auch bei Druckanwendung auf die Packungsoberfläche kein Füllgut austreten kann. Die so entstandenen Packungen werden erst jetzt von oben und unten fest zwischen zwei Platten justiert und entsprechend dem Hauptanspruch weiter behandelt. Bei dem neuen Verfahren übernimmt das Füllgut der Packungen die Funktion der Stempel oder der Druckluft beim Ausformen von (unbefüllten) Tiefziehfolien.

Ein Verfahren zur Herstellung von Formkörpern aus pastösen Lebensmitteln wird in der DE 42 19 862 C1 beschrieben:
Nach diesem Verfahren wird in Folien gehülltes, warmes und daher plastisches Füllgut portioniert, indem es zusammen mit den Folien in Formen gepreßt wird und das überschüssige Füllmaterial durch seitliche Schlitze entweichen kann, wobei es durch den großzügig bemessenen Folienüberstand aufgefangen wird. Nach dem Erkalten des plastischen Füllmaterials auf Erstarrungstemperatur, wird das geformte Füllgut der Form entnommen und von der Folie befreit. In diesem Verfahren wird nicht die Herstellung einer Lebensmittelpackung beschrieben, sondern ausschließlich die Formgebung eines erwärmten und dadurch pastösen Füllgutes. Nach der Produkterkaltung werden die Folien nicht mehr benötigt und daher entfernt. Die beschriebenen Formgesenke sind als Einzelformen entwickelt worden, die nicht in ihrem Inneren unterteilt sind, folglich verfügen sie über keine Trennstege.
Keinesfalls entstehen bei Anwendung dieses Verfahrens Lebensmirtelpackungen, die das Füllgut bei der weiteren Behandlung vor Rekontamination schützen oder sogar als Verbraucherpackungen vermarktet werden können.

Aus der gattungsbildenden DE 42 31 093 C1 ist ein Verfahren zur Herstellung und Formgebung von Lebensmitteln, wie z.B. Fleisch- und Wurstwaren bekannt, wobei ein Halbfertigprodukt in einen Folienbeutel oder zwischen Folien verbracht und unter Vakuum verschlossen wird, die gefüllte Packung zwischen zwei beweglichen, einstellbaren Platten justiert und unter Aufbringung eines leichten Drucks auf die Packung eine Gleichverteilung des Packungsinhalts erreicht wird.

Aufgabe der Erfindung ist es, ein Verfahren zu benennen, nach dem in einfacher und sicherer Weise die Bearbeitungsschritte der Verpackung und Haltbarmachung von Lebensmitteln durchgeführt werden können und nach dem ein qualitativ stabiles und ansehaliches Endprodukt entsteht.

Diese Aufgabe wird durch den Hauptanspruch gelöst.
Eine festgelegte Portion des pastösen Halbfertigprodukts wird auf eine Unterfolie gespritzt. Darüber wird eine Oberfolie gezogen. Im Unterdruck werden die Ober- und Unterfolie an den Rändern verschweißt.
Das Halbfertigprodukt kann auch portionsweise in einen Folienbeutel gefüllt werden, der danach entlüftet und verschlossen wird.
Die so entstandenen Packungen werden von oben und unten fest zwischen zwei Platten justiert. Eine oder auch beide Platten weisen Ausmuldungen auf, die der späteren Gestalt des Endproduktes entsprechen. Die beiden Platten werden zunächst so weit zusammengefahren, daß sich das Halbfertigprodukt unter leichtem Druck gleichmäßig zwischen den Folien verteilt. Sobald ein bestimmter Plattenabstand erreicht oder festgelegter Druck innerhalb der Packungen aufgebaut ist, wird durch Bohrungen in den Ausmuldungen der Platten die Luft abgesaugt. Während die auf den Stegen der Platten liegenden Folien nicht erfaßt werden, wird die Folie in den Ausmuldungen gedehnt und an die Wandung der Mulden gezogen. Gleichzeitig rückt das Füllgut durch den Druck, der durch weitere Annäherung der Platten aufgebaut wird, nach und befindet sich am Abschluß dieses Vorgangs vollständig in den mit Folie ausgekleideten Mulden. Im Falle einer beidseitigen Packungsverformung müssen die Ausmuldungen beider Platten exakt aufeinander abgestimmt sein.
Danach werden Folienstege, wie im Verfahren DE 39 11 463 C2 vorgesehen, versiegelt, hier aber unter Verwendung eines besonderen Folienmaterials durch einen Fett- und Eiweißfilm hindurch.
Wenn eine Versiegelung nicht erwünscht ist, werden die Packungen zwischen zwei Gatter, wie sie im Verfahren DE 42 23 482 C1 Anwendung finden, gespannt, die der Form der Plattenmulden angepaßt sind.
In beiden Fällen wird erreicht, daß die Halbfertigprodukte während der Haltbarmachung berührungslos nebeneinander zwischen den Folien liegen.

Die verpackten Halbfertigprodukte können danach zur Zwischenlagerung tiefgefroren, sofort erhitzt und anschließend abgekühlt, oder mit Hochdruck von ca. 500 bis 1.000 MPa zur Fertigstellung behandelt werden. Rohwurst kann entsprechend dem Verfahren DE 43 26 688 C1 und auch DE 196 53 677 weiterbehandelt werden.

Da nach dem vorgestellten Verfahren bereits die Halbfertigprodukte luftdicht verpackt sind, ist die Gefahr der Rekontamination ausgeschlossen. Sämtliche Aromastoffe verbleiben im Produkt. Der sehr personalintensive Füll- und Verpackungsvorgang kann voll automatisiert werden. Der Einsatz von Därmen oder anderen Umhüllungen entfällt.

## Patentansprüche

1. Verfahren zur Herstellung und Formgebung von Lebensmitteln, wie z.B. Fleisch- und Wurstwaren, wobei ein Halbfertigprodukt in einen Folienbeutel oder zwischen Folien verbracht und unter Vakuum verschlossen wird, die gefüllte Packung zwischen zwei beweglichen, einstellbaren Platten justiert und unter Aufbringung eines leichten Drucks auf die Packung eine Gleichverteilung des Packungsinhalts erreicht wird,
**dadurch gekennzeichnet, daß**
mit Erreichen eines bestimmten Plattenabstands oder eines Drucks innerhalb der Packung in vorgesehenen Plattenmulden ein Unterdruck erzeugt wird, so daß die Folie der Packung im Bereich der Mulden eine Dehnung erfährt und an der Muldenwandung zu liegen kommt, wobei durch einsetzende Druckerhöhung mittels weiterer Verringerung des Plattenabstands Füllgut in die Mulden nachrückt, so daß das Füllgut die Oberflächenform der Platten annimmt.

## Claims

1. Method of manufacturing and shaping foodstuffs such as meat and sausage products, wherein a semifinished product is inserted into a bag made of film or is placed between film sheets and is enclosed under vacuum, the filled packet is aligned between two movable, adjustable plates, and a slight pressure is applied to the packet to obtain a uniform distribution of the content thereof,
**characterised in that**
when a specific distance between plates or a pressure within the packet has been reached, a reduced pressure is generated in cavities provided in the plates, so that the film of which the packet is composed undergoes stretching in the region of the cavities and becomes apposed to the cavity wall, and as the pressure is increased by further reduction of the distance between the plates, the filling conforms to the surface configuration of the plates.

## Revendications

1. Procédé de fabrication et de mise en forme de produits alimentaires, comme par exemple de produits carnés et de charcuterie, un produit semi-fini étant placé dans un sac en film ou entre des films et étant scellé sous vide, le paquet rempli étant aligné entre deux plaques mobiles réglables et une répartition égale du contenu du paquet étant obtenue en exerçant une légère pression sur le paquet,
**caractérisé en ce que**
lorsqu'est atteint un certain écart entre les plaques ou une certaine pression à l'intérieur du paquet, dans des cavités prévues dans la plaque, une dépression est produite de telle sorte que le film du paquet subisse un allongement dans la zone des cavités et vienne s'appliquer sur la paroi des cavités et, tout en instaurant une augmentation de la pression et en réduisant encore l'écart entre les plaques, le produit de remplissage venant se loger dans les cavités de sorte que le produit de remplissage adopte la forme de surface des plaques.
